# EUROPEAN PATENT APPLICATION

(11) **EP 4 144 595 A1**
(43) Date of publication of application: **08.03.2023**
(21) Application number: 21795295.1
(22) Date of filing: 20.04.2021
(51) Int. Cl.: B60R 21/207, B60R 21/2338

(54) **OCCUPANT RESTRAINT DEVICE**

(30) Priority: 27.04.2020 JP 2020078467
(71) Applicant: Autoliv Development AB, 44783 Vargarda (SE)
(72) Inventor: MATSUSHITA, Tetsuya, Yokohama-shi, Kanagawa 222-8580 (JP); YAMADA, Akihiro, Yokohama-shi, Kanagawa 222-8580 (JP); ANDO, Hiroshi, Yokohama-shi, Kanagawa 222-8580 (JP)
(74) Representative: Müller Verweyen
(86) International application number: PCT/JP2021/016035
(87) International publication number: WO 2021/220885

(57) **Abstract**

To provide an occupant restraining device capable of accurately adjusting the position of an airbag upon expansion and deployment. An occupant restraining device (100) provided with tensile cloths (2a, 2b, 2c, and 2d), both ends of which are secured to the upper and lower parts of a vehicle seat (5) and that bias an airbag (3) expanding and deploying to the side of an occupant (P) seated in the seat (5), towards the occupant (P), where the tensile cloths (2a, 2b, 2c, and 2d) are joined by at least one joint section (23a, 24a, 23c, and 24c) on the surface of the airbag (3), and are provided with retaining parts (9a, 9b, 90a, and 90b) that retain the tensile cloths (2a, 2b, 2c, and 2d) slidably on the surface of the airbag (3).

## Description

### TECHNICAL FIELD

The present invention relates to an occupant restraining device provided with an airbag.

This application claims priority based on Japanese Application 2020-78467 filed April 27, 2020, which is incorporated by reference in its entirety.

### BACKGROUND ART

Airbag devices have become widely used in recent years. An airbag device is a restraining device that operates in the case of an emergency such as a vehicle collision and, for example, the airbag is expanded and deployed by gas pressure to protect the occupant. There are various types of airbag devices depending on the installation site and application.

Patent Document 1 discloses side airbag devices that are provided on both sides of a vehicle seat and expand and deploy to the sides of the occupant.

### RELATED ART DOCUMENTS

### Patent Documents

Patent Document 1: Japanese Unexamined Patent Application 2014-034356

### SUMMARY OF THE INVENTION

### PROBLEM TO BE SOLVED BY THE INVENTION

Furthermore, a technique for adjusting the position of an expanding and deploying airbag using a tensile cloth is also known. With this manner of technique, when the airbag expands and deploys, the tensile cloth surrounds and retains the outside of the airbag and biases the airbag to the side of the occupant.

On the other hand, if the tensile cloth biases the expanding and deploying airbag toward the occupant, the tensile cloth may not be able to properly adjust the airbag position if the airbag leaves its intended position. However, the technique according to Patent Document 1 as described above cannot solve such a problem.

In light of the circumstances described above, an object of the present invention is to provide an occupant restraining device in which the tensile cloth can more accurately adjust the position of the airbag when the airbag is expanded and deployed.

### MEANS TO SOLVE THE PROBLEM

The occupant restraining device according to the present invention includes:
tensile cloths having both ends secured to the upper part and lower part of a vehicle seat that bias an airbag that expands to the side of an occupant seated in the seat, towards the occupant, wherein
the tensile cloths are joined in at least one joint section on the surface of the airbag and are provided with retaining parts that slidably retain the tensile cloths on the surface of the airbag.

### EFFECT OF THE INVENTION

According to the present invention, when the airbag expands and deploys, the airbag can be more accurately positioned.

### BRIEF DESCRIPTION OF THE DRAWINGS

FIG. 1 is a diagram illustrating a state in which the occupant restraining device according to Embodiment 1 is attached to a vehicle seat.
FIG. 2 is a schematic diagram illustrating a state in which an airbag of the occupant restraining device is expanded and deployed.
FIG. 3 is an enlarged view with an enlarged illustration of an airbag.
FIG. 4 is a schematic diagram illustrating a state in which an airbag of the occupant restraining device according to Embodiment 2 is expanded and deployed.
FIG. 5 is an enlarged view with an enlarged illustration of an airbag.
FIG. 6 is a schematic diagram illustrating a state in which an airbag of the occupant restraining device according to Embodiment 3 is expanded and deployed.
FIG. 7 is a schematic diagram illustrating a state in which an airbag of the occupant restraining device according to Embodiment 4 is expanded and deployed.
FIG. 8 is an enlarged view with an enlarged illustration of an airbag.
FIG. 9 is a schematic diagram illustrating a state in which an airbag of the occupant restraining device according to Embodiment 5 is expanded and deployed.
FIG. 10 is a schematic diagram illustrating a state in which an airbag of the occupant restraining device according to Embodiment 6 is expanded and deployed.
FIG. 11 is a schematic diagram illustrating a state in which an airbag of the occupant restraining device according to Embodiment 7 is expanded and deployed.
FIG. 12 is a schematic diagram illustrating a state in which an airbag of the occupant restraining device according to Embodiment 8 is expanded and deployed.

### DESCRIPTION OF THE PREFERRED EMBODIMENTS

The occupant restraining device according to the Embodiment of the present invention will be described in detail below according to the diagrams. The occupant restraining device according to the embodiment of the present invention is equipped to a seat of a vehicle.

### Embodiment 1

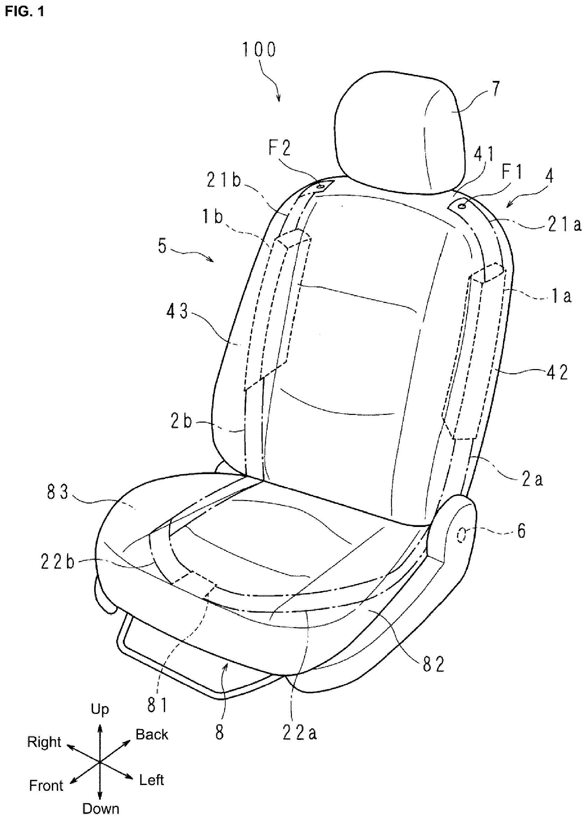

FIG. 1 is a diagram illustrating a state in which the occupant restraining device 100 according to Embodiment 1 is attached to a vehicle seat 5. FIG. 1 illustrates a state before the airbag expands and deploys. For convenience, descriptions will be given in the following using each of the front-to-back, left-right, and up-down directions defined in the figures.

The seat 5 includes the seat cushion 8 on which the occupant sits, and a seatback 4 that stands up from the back side of the seat cushion 8 and supports the back of the occupant. The lower edge of the seatback 4 is provided at the rear edge of the seat cushion 8, and is rotatably retained by a shaft 6. Accordingly, the seatback 4 can be adjusted at an angle by rotating the shaft 6 in the front-to-back direction.

A headrest part 7 is provided in the center in the left-right direction on the upper part of the seatback 4 rising up from the upper surface 41 of the seatback 4. The headrest part 7 supports the head of the occupant seated on the seat cushion 8.

The occupant restraining device 100 includes airbag modules 1a and 1b containing an airbag stowed within the housing and tensile cloths 2a and 2b that perform position adjustment of the airbag that expands and deploys. The airbag modules 1a and 1b are provided on both the left and right sides of the seatback 4. Specifically, the airbag modules 1a and 1b are arranged between the frame (not shown) inside the seatback 4 and the cover covering the frame.

FIG. 1 illustrates a case where an airbag module 1b is provided on the right side of the seatback 4 and an airbag module 1a is provided on the left side of the seatback 4, but the present invention is not limited to this and the airbag modules 1a and 1b may be provided on only one side.

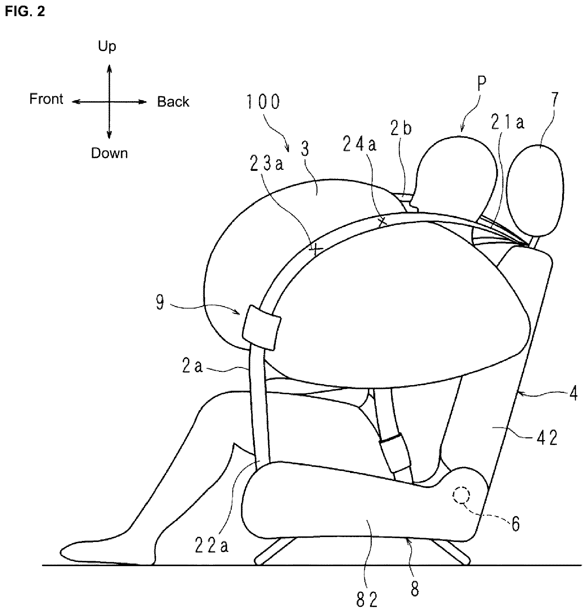

Each airbag module 1 includes, for example, an airbag 3 (see FIG. 2), which is a bag body formed by sewing a peripheral edge of, for example, two panels, and an inflator (not shown) that emits gas into the airbag 3.

The airbag 3, for example, has the inflator installed inside the airbag 3. The occupant restraining device 100 protects the occupants through expansion and deployment of the airbag 3 in the forward direction in the event of a vehicle collision.

In FIG. 1, for convenience, the tensile cloths 2a and 2b are illustrated by an alternate long and short dashed line.
The tensile cloths 2a and 2b have a band shape having a prescribed width, and a tensile cloth 2a is provided on the left side of the seatback 4, and a tensile cloth 2b is provided on the right side of the seatback 4. The tensile cloths 2a and 2b are arranged in advance inside the side part of the seatback 4 and inside the side part of the seat cushion 8.

In the tensile cloth 2a, the upper end part 21a is secured to a securing position F1 of the seatback 4 frame on the left side of the headrest part 7 that is the upper surface 41 of the seatback 4. In the tensile cloth 2b, the upper end part 21b is secured to a securing position F2 of the seatback 4 frame on the right side of the headrest part 7 that is the upper surface 41 of the seatback 4.

In other words, a lower end part 22a of the left tensile cloth 2a and a lower end part 22b of the right tensile cloth 2b are retained by the lower securing part 81 provided in the center at the front of the seat cushion 8. The lower securing part 81 includes, for example, two metal plates, and the lower end parts 22a and 22b of the tensile cloths 2a and 2b are sandwiched between such metal plates.

The tensile cloths 2a and 2b are arranged inside these side parts from the seatback 4 to the seat cushion 8. The tensile cloth 2a is arranged from the left side of the seatback 4 to the left side of the seat cushion 8, and the tensile cloth 2b is arranged from the right side of the seatback 4 to the right side of the seat cushion 8.

Each of the tensile cloths 2a and 2b has the middle section thereof passing through the airbag modules 1a and 1b, and are joined to each airbag 3 in the airbag modules 1a and 1b as described below.

With the occupant restraining device 100 according to the present invention, when a vehicle collides or is heavily impacted, the airbag 3 instantly breaks the cover of the seatback 4 and expands and deploys to the front of the seat 5. In addition, at the same time as the expansion and deployment of the airbag 3, the tensile cloths 2a and 2b burst out from both side parts of the seat 5 together with the airbag 3 to retain the expanding and deploying airbag 3, enabling arranging the airbag 3 at the center of the seatback 4, in other words, the occupant side of the seat cushion 8.

FIG. 2 is a schematic diagram illustrating a state in which an airbag 3 of the occupant restraining device 100 is expanded and deployed. For convenience, FIG. 2 illustrates expansion and deployment of only the airbag 3 on the left side of the occupant P. In effect, however, the airbag 3 expands and deploys similarly on both the left and right sides of the occupant P, where position adjustment of the airbag 3 on the left side is performed by the tensile cloth 2a, and position adjustment of the airbag 3 on the right side is performed by the tensile cloth 2b.
Therefore, a description of the tensile cloth 2a on the left side of the seat 5 will be described using FIG. 2, and the description of the tensile cloth 2b will be omitted.

As illustrated in FIG. 2, when a vehicle is in a collision, the airbag 3 of the airbag module 1a breaks the cover from the inside of the side surface 42 of the seatback 4 and expands and deploys toward the front of the seat 5. In addition, simultaneous with the expansion and deployment of the airbag 3, the tensile cloth 2a also bursts out and surrounds the outside of the expanding and deploying airbag 3, which is then arranged to the center of the seatback 4, in other words, where the occupant P is sitting on the seat cushion 8, and holds and protects the occupant P.

Here, the tensile cloth 2a inevitably comes into partial contact with the outer surface of the airbag 3. With the occupant restraining device 100 according to Embodiment 1, a prescribed location of the contact area between the airbag 3 and the tensile cloth 2a is sewn together to join the tensile cloth 2a to the airbag 3.

In the example of FIG. 2, the tensile cloth 2a is sewn to the airbag 3 at two joint sections 23a and 24a indicated by an "X". The joint section 23a is positioned below the joint section 24a.

In addition, in the occupant restraining device 100, a retaining part 9 that retains the tensile cloth 2a is provided below the joint section 23a and on the lower part of the airbag 3. The retaining part 9 retains the tensile cloth 2a so that the airbag 3 does not detach from the normal position when the airbag 3 expands and deploys.

Here, the lower part of the airbag 3 includes the lower end part in the vertical direction of the expanded and deployed airbag 3, and refers to from this lower end part upwards to the portion where the airbag 3 is most expanded in the vehicle width direction. The section of the airbag 3 lower than the center in the vertical direction is illustrated in general, but is not limited thereto.

In addition, the upper part of the airbag 3 includes the upper end part in the vertical direction of the expanded and deployed airbag 3, and refers to from this upper end part downwards to the portion where the airbag 3 is most expanded in the vehicle width direction. The section of the airbag 3 higher than the center in the vertical direction is illustrated in general, but is not limited thereto.

Note that the portion where the airbag 3 is most expanded in the width direction of the vehicle described above is the portion of the contact region where the expanded and deployed airbag 3 is in contact with the tensile cloth 2. Therefore, the most inflated area in such a contact area may differ from the most inflated area of the entire airbag 3.

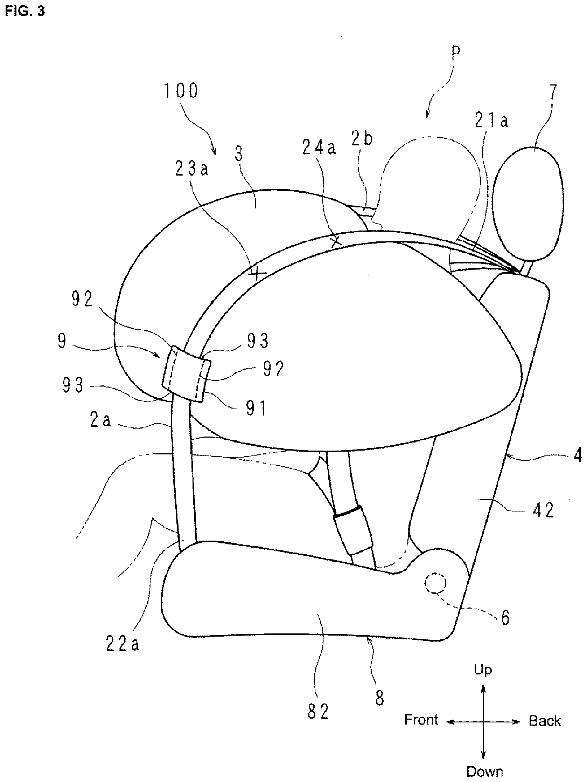

FIG. 3 is an enlarged view with an enlarged illustration of an airbag 3. In FIG. 3, for convenience, the occupant P is illustrated by an alternating long and short dashed line.
The retaining part 9 includes a rectangular retaining piece 91, and the retaining piece 91 is sewn to the lower part of the airbag 3. The retaining piece 91 is sewn to the airbag 3 using sewn parts 92 at both end parts on the left and right sides. The sewn parts 92 are separated by prescribed intervals in the left-right direction, and the spacing is wider than the width of the tensile cloth 2a. In this manner, a passage having an opening 93 at both ends in the vertical direction is formed in the retaining part 9. The tensile cloth 2a is stowed inside the side part of the seatback 4 while passing through the passage of the retaining part 9.

As described above, both end parts of the retaining piece 91 are sewn to the airbag 3 and the tensile cloth 2a passes through the passages formed between the retaining piece 91 and the airbag 3; thus, the tensile cloth 2a is held freely on the airbag 3, and the airbag 3 is retained on the tensile cloth 2a upon expansion and deployment. Thus, the airbag 3 can be suppressed from separating from the tensile cloth 2a or separating from a normal position, and the tensile cloth 2a can perform position adjustment that reliably biases the airbag 3 toward the occupant P side.

Additionally, since the tensile cloth 2a freely slides without being fixed to the retaining part 9, and the retaining part 9 has an opening 93 in the vertical direction, when the airbag 3 expands and deploys, the sliding direction of the tensile cloth 2a can be guided in the vertical direction, allowing flexibility in the selection of the folding method while stowed.

Furthermore, with the occupant restraining device 100, since the retaining part 9 is provided in the lower part of the airbag 3, position adjustment of the expanding and deploying airbag 3 enabling lifting and arranging in a desirable position near the head of the occupant P can more effectively be executed.

As described above, by joining the airbag 3 and the tensile cloth 2a at the joint sections 23a and 24a in advance, the position of the expanding and deploying airbag 3 can be more stably adjusted.

In the above, the case in which tensile cloth 2a has two joint sections 23a and 24a has been described as an example, but is not limited thereto. With the tensile cloth 2a, such a joint section may be at one location or at three or more locations.

In the above description, the case in which two joint sections 23a and 24a are provided in a narrow region of the tensile cloth 2a has been described as an example, but is not limited thereto. For example, each of the joint sections 23a and 24a may be provided over a prescribed range along the longitudinal direction of the tensile cloth 2a.

In the above, the case in which the tensile cloth 2a is sewn to the airbag 3 has been described as an example, but is not limited thereto. For example, the tensile cloth 2a may be fixed to the airbag 3 by an adhesive, or may be fixed using a surface fastener or the like.

Note that the case in which the tensile cloths 2a and 2b have a band shape has been described as an example, but is not limited thereto. The tensile cloths 2a and 2b may be a wide cloth or a large area of cloth.

In the above, the case in which the retaining piece 91 of the retaining part 9 is sewn to the airbag 3 has been described as an example, but is not limited thereto. For example, the retaining piece 91 may be secured to the airbag 3 by an adhesive.

### Embodiment 2

In Embodiment 1, a case where one of the tensile cloths 2a and 2b is provided for each airbag 3 has been described as an example, but is not limited thereto.

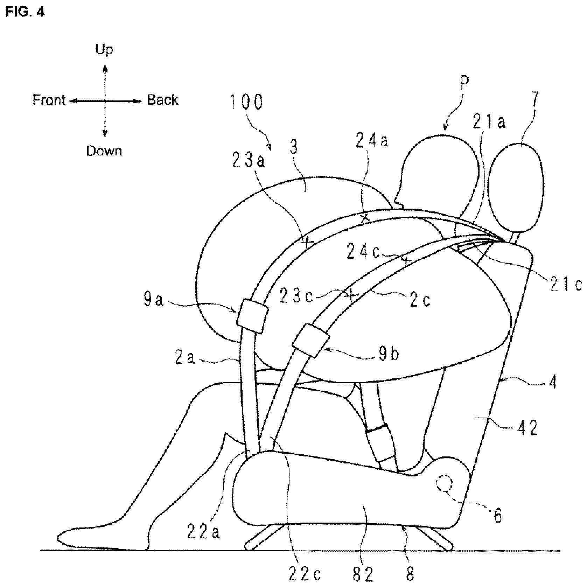

FIG. 4 is a schematic diagram illustrating a state in which airbag 3 of the occupant restraining device 100 according to Embodiment 2 is expanded and deployed. In FIG. 4, for convenience, expansion and deployment of only the airbag 3 on the left side of the occupant P is illustrated, however in actuality, the airbags 3 expand and deploy in the same manner on both the left and right sides of the occupant P.

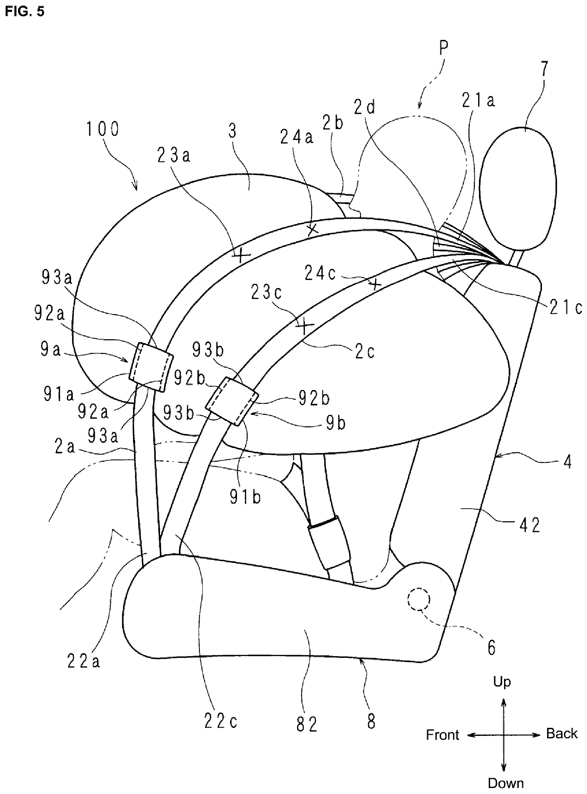

In the occupant restraining device 100 according to Embodiment 2, position adjustment is performed by the tensile cloths 2a and 2c on the left side airbag 3, and position adjustment is performed by the tensile cloths 2b and 2d on the right side airbag 3 (see FIG. 5).
In the following, an example of expansion and deployment of only the airbag 3 on the left side of the occupant P will be described with reference to FIG 4.

The upper end part 21a of the tensile cloth 2a and the upper end part 21c of the tensile cloth 2c are secured to the upper part of the seatback 4. In addition, a lower end part 22a of the tensile cloth 2a and a lower end part 22c of the tensile cloth 2c are retained by the lower securing part 81 at the front center section of the seat cushion 8 (see FIG. 1). The tensile cloths 2a and 2c are arranged together at the left side of the seat 5.

With the occupant restraining device 100 according to Embodiment 2, the tensile cloth 2a has two joint sections 23a and 24a, and the tensile cloth 2c has two joint sections 23c and 24c. Of the joint section 23a and joint section 24a, the joint section 23a is positioned lower than the joint section 24a and of the joint section 23c and the joint section 24c, the joint section 23c is positioned lower than the joint section 24c.

Additionally, with the occupant restraining device 100, a retaining part 9a is provided on the lower part of the airbag 3 that retains the tensile cloth 2a and is below the joint section 23a of the tensile cloth 2a, and a retaining part 9b is provided on the lower part of the airbag 3 that retains the tensile cloth 2c and is below the joint section 23c of the tensile cloth 2c. The retaining parts 9a and 9b retain the tensile cloths 2a and 2c, respectively, so that the airbag 3 is not separated from the normal position when the airbag 3 expands and deploys.

FIG. 5 is an enlarged view with an enlarged illustration of an airbag 3. In FIG. 5, for convenience, the occupant P is illustrated by an alternating long and short dashed line.
The retaining part 9a includes a rectangular retaining piece 91a, and the retaining piece 91a is sewn to the lower part of the airbag 3. The retaining piece 91a is sewn to the airbag 3 using the sewn parts 92a at both end parts of the left and right sides. The sewn parts 92a are separated by prescribed intervals in the left-right direction, and the spacing is wider than the width of the tensile cloth 2a. Thus, a passage including an opening 93a at both ends in the vertical direction is formed in the retaining part 9a.

The retaining part 9b includes a rectangular retaining piece 91b, and the retaining piece 91b is sewn to the lower part of the airbag 3. The retaining piece 91b is sewn to the airbag 3 using sewn parts 92b at both end parts of the left and right sides. The sewn parts 92b are separated by prescribed intervals in the left-right direction, and the spacing is wider than the width of the tensile cloth 2c. Thus, a passage including an opening 93b at both ends in the vertical direction is formed in the retaining part 9b.
The tensile cloths 2a and 2c are disposed on the inner side of the side parts of the seat 5 with the passages of the retaining parts 9a and 9b therebetween.

As described above, both end parts of the retaining part 9a are sewn to the airbag 3 and the tensile cloth 2a passes through the passage formed between the retaining piece 91a and the airbag 3; thus, the tensile cloth 2a is held freely on the airbag 3, and the airbag 3 is retained on the tensile cloth 2a upon expansion and deployment.

Additionally, both end parts of the retaining part 9b are sewn to the airbag 3, and the tensile cloth 2c passes through the passageway formed between the retaining piece 91b and the airbag 3, so that the tensile cloth 2c is held freely on the airbag 3, and the airbag 3 is retained on the tensile cloth 2c when expanded and deployed.

Thus, the separating of the airbag 3 from the tensile cloths 2a, 2c and separating from the normal position can be suppressed, and the tensile cloths 2a and 2c can reliably bias arrangement of the airbag 3 to the side of the occupant.

Additionally, the tensile cloths 2a and 2c are not secured to the retaining parts 9a, 9b, and can slide freely, and the retaining parts 9a and 9b are open in the vertical direction. Thus, upon expansion and deployment of the airbag 3, the retaining parts 9a and 9b are able to guide the sliding direction of each of the tensile cloths 2a and 2c to a vertical direction enabling flexibility for selecting a folding method while stowed.

As described above, as two tensile cloths 2a and 2c perform position adjustment for one airbag 3, and the airbags 3 and the two tensile cloths 2a and 2c are joined at the joint sections 23a, 24a, 23c, and 24c in advance, position adjustment of the expanding and deploying airbag 3 can be more stably adjusted.

In what has been described above, the case where two tensile cloths 2a and 2c are provided for one airbag 3 has been described as an example, but is not limited thereto, and there may be three or more tensile cloths 2 for one airbag 3.

Sections similar to Embodiment 1 are given the same code and detailed description thereof is omitted.

### Embodiment 3

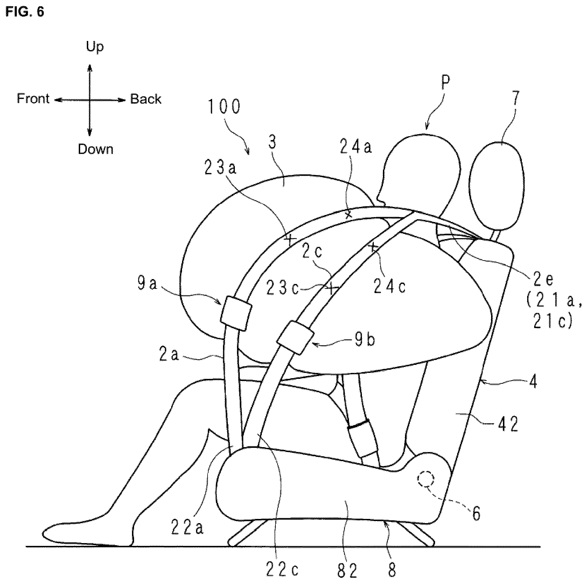

FIG. 6 is a schematic diagram illustrating a state in which an airbag 3 of the occupant restraining device 100 according to Embodiment 3 is expanded and deployed. FIG. 6 illustrates expansion and deployment of only the airbag 3 on the left side of the occupant P. In actuality, the airbag 3 expands and deploys on both the left and right sides of the occupant P in the same manner. Therefore, in the following, FIG. 6 will be used to describe expansion and deployment of only the airbag 3 to the left of the occupant P as an example.

With the occupant restraining device 100 according to Embodiment 3, the tensile cloth 2a and the tensile cloth 2c are provided for one airbag 3 on the left side. The upper end part 21a of the tensile cloth 2a and the upper end part 21c of the tensile cloth 2c are retained at a securing position F1 of the seatback 4 (see FIG. 1).

In addition, a lower end part 22a of the tensile cloth 2a and a lower end part 22c of the tensile cloth 2c are retained by the lower securing part 81 at the front center section of the seat cushion 8 (see FIG. 1). The tensile cloths 2a and 2c are arranged together at the left side of the seat 5.

The tensile cloth 2a has two joint sections 23a and 24a, and the joint section 23a is positioned below the joint section 24a. In addition, the tensile cloth 2c has two joint sections 23c and 24c, and the joint section 23c is located below the joint section 24c.

With the occupant restraining device 100 according to Embodiment 3, the upper side of the tensile cloth 2a and the tensile cloth 2c are integrated together. In other words, the upper end part 21a of the tensile cloth 2a and the upper end part 21c of the tensile cloth 2c are sewn together over a prescribed range to form an integrated part 2e. The integrated part 2e is formed between the securing position F1 of the seatback 4 upper part and the joint section 24a of the tensile cloth 2a as well as the joint section 24c of the tensile cloth 2c. In addition, the integrated part 2e may be formed by using an adhesive.

In addition, similarly to Embodiment 2, in the occupant restraining device 100, a retaining part 9a is provided on the lower part of the airbag 3 that retains the tensile cloth 2a and is below the joint section 23a of the tensile cloth 2a, and a retaining part 9b is provided on the lower part of the airbag 3 that retains the tensile cloth 2c and is below the joint section 23c of the tensile cloth 2c. When the airbag 3 expands and deploys, the retaining parts 9a and 9b restrain the airbag 3 to the tensile cloths 2a and 2c so that the airbag 3 does not separate from the normal position.

The retaining part 9a has a retaining piece 91a, the left and right sides of the retaining piece 91a are sewn to the airbag 3, and the tensile cloth 2a passes through the passage formed between the retaining piece 91a and the airbag 3; thus, the tensile cloth 2a can slide freely on the airbag 3 and upon expansion and deployment, the airbag 3 is retained by the tensile cloth 2a.

Additionally, since the retaining part 9b includes the retaining piece 91b, both left and right side end parts of the retaining piece 91b are sewn to the airbag 3, and the tensile cloth 2c passes through a passage formed between the retaining piece 91b and the airbag 3, and thus the tensile cloth 2c can slide freely on the airbag 3 and upon expansion and deployment, the airbag 3 is retained by the tensile cloth 2c.

Thus, the separating of the airbag 3 from the tensile cloths 2a, 2c and separating from the normal position can be suppressed, and the tensile cloths 2a and 2c can reliably bias arrangement of the airbag 3 to the side of the occupant. In addition, when the airbag 3 expands and deploys, the retaining parts 9a and 9b each guide the sliding direction of the tensile cloths 2a and 2c in the vertical direction.

Furthermore, with the occupant restraining device 100 according to Embodiment 3, as described above, the upper end part 21a of the tensile cloth 2a and the upper end part 21c of the tensile cloth 2c have an integrated part 2e that is sewn over a prescribed range.

Therefore, the work of stowing the tensile cloth 2a and tensile cloth 2c in the side part of the seatback 4 is simplified. Also, when the airbag 3 expands and deploys, the upper end part 21a of the tensile cloth 2a and upper end part 21c of the tensile cloth 2c both pop out, allowing the airbag 3 to more rapidly adjust position.

Note that, while in the description, only the upper end part 21a of the tensile cloth 2a and the upper end part 21c of the tensile cloth 2c are integrated, this is not a limitation. The lower end part 22a of the tensile cloth 2a and the lower end part 22c of the tensile cloth 2c may be integrated together.

Sections similar to Embodiment 1 are given the same code and detailed description thereof is omitted.

### Embodiment 4

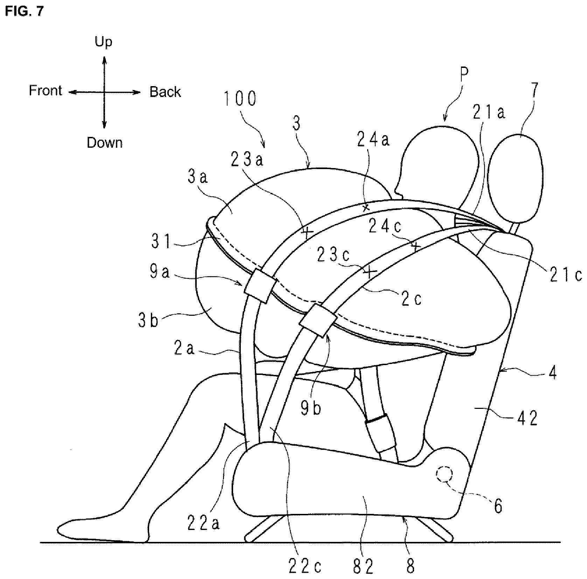

FIG. 7 is a schematic diagram illustrating a state in which airbag 3 of the occupant restraining device 100 according to Embodiment 4 is expanded and deployed. FIG. 7 illustrates expansion and deployment of only the airbag 3 on the left side of the occupant P. In actuality, the airbag 3 expands and deploys on both the left and right sides of the occupant P in the same manner. Therefore, in the following, FIG. 7 will be used to describe expansion and deployment of only the airbag 3 to the left of the occupant P as an example.

In the occupant restraining device 100 according to Embodiment 4, the airbag 3 includes a first panel 3a and second panel 3b. The airbag 3 is configured by sewing the periphery of the first panel 3a and the second panel 3b.

In sewing of the first panel 3a and the second panel 3b, a section corresponding to a margin seam is produced, but the section is a non-expanding section 31 that does not expand during expansion and deployment of the airbag 3. The airbag 3 of Embodiment 4 is formed with a non-expanding section 31 on the outer side of the seam of the first panel 3a and the second panel 3b, and the airbag 3 is assembled to the seat 5 with the non-expanding section 31 facing outward.

With the occupant restraining device 100 according to Embodiment 4, the tensile cloth 2a and the tensile cloth 2c are provided for one airbag 3 on the left side. The upper end part 21a of the tensile cloth 2a and the upper end part 21c of the tensile cloth 2c are secured to the upper part of the seatback 4. In addition, the lower end part 22a of the tensile cloth 2a and the lower end part 22c of the tensile cloth 2c are retained by the lower securing part 81 of the seat cushion 8 (see FIG. 1). The tensile cloths 2a and 2c are arranged together on the left side of the seatback 4.

The tensile cloth 2a has two joint sections 23a and 24a, and the joint section 23a is positioned below the joint section 24a. In addition, the tensile cloth 2c has two joint sections 23c and 24c, and the joint section 23c is located below the joint section 24c.

Additionally, with the occupant restraining device 100 according to Embodiment 4, the retaining part 9a that retains the tensile cloth 2a and the retaining part 9b that retains the tensile cloth 2c are provided on the lower part of the airbag 3. The retaining part 9a is provided in the non-expanding section 31 below the joint section 23a of the tensile cloth 2a, and the retaining part 9b is provided in the non-expanding section 31 below the joint section 23c of the tensile cloth 2c. When the airbag 3 expands and deploys, the retaining parts 9a and 9b restrain the airbag 3 to the tensile cloths 2a and 2c so that the airbag 3 does not separate from the normal position.

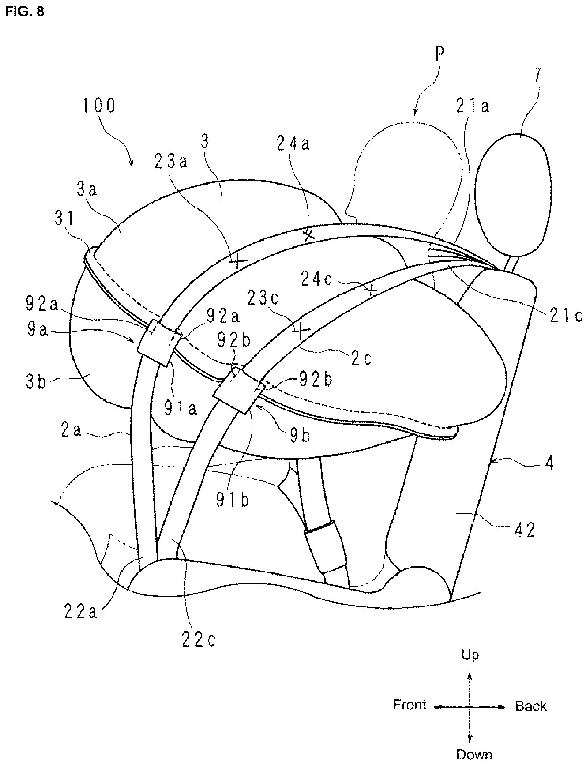

FIG. 8 is an enlarged view with an enlarged illustration of an airbag 3. In FIG. 8, for convenience, the occupant P is illustrated by an alternating long and short dashed line.
The retaining part 9a includes a rectangular retaining piece 91a, and the retaining piece 91a is sewn to the non-expanding section 31 of the airbag 3. The retaining piece 91a is sewn to the non-expanding section 31 with sewn parts 92a at both end parts of the left and right sides. The sewn parts 92a are separated by prescribed intervals in the left-right direction, and the spacing is wider than the width of the tensile cloth 2a. Thus, a passage open in the vertical direction is formed in the retaining part 9a.

The retaining part 9b includes a rectangular retaining piece 91b, and the retaining piece 91b is sewn to the non-expanding section 31 of the airbag 3. The retaining piece 91b is sewn to the non-expanding section 31 using the sewn parts 92b at both end parts on both the left and right sides. The sewn parts 92b are separated by prescribed intervals in the left-right direction, and the spacing is wider than the width of the tensile cloth 2c. Thus, a passage open in the vertical direction is formed in the retaining part 9b.
The tensile cloths 2a and 2c are arranged inside the side parts of the seatback 4 and pass through the retaining parts 9a and 9b.

The left and right side parts of the retaining piece 91a of the retaining part 9a are sewn to the non-expanding section 31, and the tensile cloth 2a passes through a passage formed between the retaining piece 91a and the non-expanding section 31. Thus, the tensile cloth 2a can slide freely on the non-expanding section 31 and the airbag 3, and upon expansion and deployment, the airbag 3 is retained in the tensile cloth 2a.
In addition, since both the left and right side end parts of the retaining piece 91b of the retaining part 9b are sewn to the non-expanding section 31, the tensile cloth 2c passes through a passage formed between the retaining piece 91b and the non-expanding section 31. Thus, the tensile cloth 2c can freely slide on the non-expanding section 31 and the airbag 3, and upon expansion and deployment, the airbag 3 is retained in the tensile cloth 2c.

Thus, the separating of the airbag 3 from the tensile cloths 2a, 2c and separating from the normal position can be suppressed, and the tensile cloths 2a and 2c can reliably bias arrangement of the airbag 3 to the side of the occupant. In addition, when the airbag 3 expands and deploys, the retaining parts 9a and 9b each guide the sliding direction of the tensile cloths 2a and 2c in the vertical direction.

Furthermore, with the occupant restraining device 100 according to Embodiment 4, the retaining parts 9a and 9b are provided in the non-expanding section 31 of the airbag 3. Thus, gas can be prevented from leaking from the seam of the retaining parts 9a and 9b that would reduce the gas pressure in the airbag 3.

Sections similar to Embodiment 1 are given the same code and detailed description thereof is omitted.

### Embodiment 5

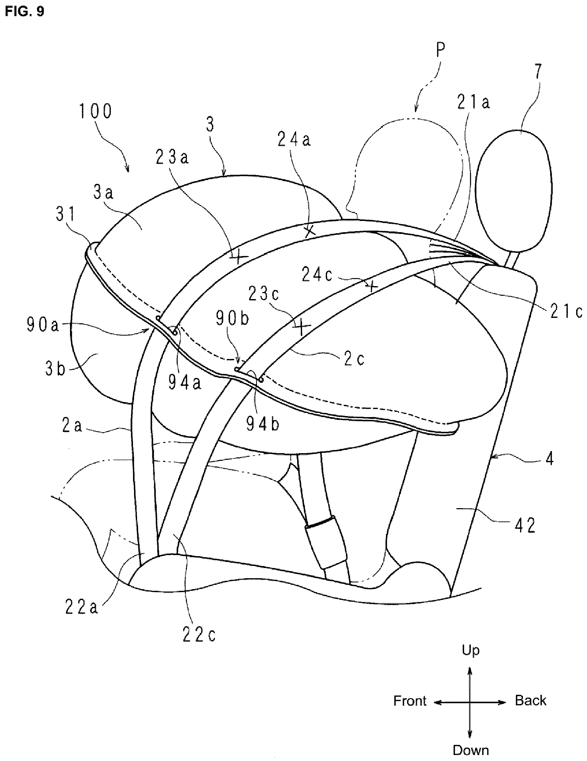

FIG. 9 is a schematic diagram illustrating a state in which an airbag 3 of the occupant restraining device 100 according to Embodiment 5 is expanded and deployed. FIG. 9 illustrates expansion and deployment of only the airbag 3 on the left side of the occupant P. In actuality, the airbag 3 expands and deploys on both the left and right sides of the occupant P in the same manner. Therefore, in the following, FIG. 9 will be used to describe expansion and deployment of only the airbag 3 to the left of the occupant P as an example. In FIG. 9, for convenience, the occupant P is illustrated by an alternating long and short dashed line.

In the occupant restraining device 100 according to Embodiment 5, the airbag 3 includes a first panel 3a and second panel 3b. The airbag 3 is configured by sewing the periphery of the first panel 3a and the second panel 3b. The airbag 3 is formed with a non-expanding section 31 on the outer side of the seam of the first panel 3a and the second panel 3b, and the airbag 3 is assembled to the seat 5 with the non-expanding section 31 facing outward.

In addition, with the occupant restraining device 100 according to Embodiment 5, the tensile cloth 2a and the tensile cloth 2c are provided for one airbag 3 on the left side. The upper end part 21a of the tensile cloth 2a and the upper end part 21c of the tensile cloth 2c are secured to the upper part of the seatback 4.

Furthermore, a lower end part 22a of the tensile cloth 2a and a lower end part 22c of the tensile cloth 2c are retained by the lower securing part 81 of the seat cushion 8 (see FIG. 1). The tensile cloths 2a and 2c are arranged together on the left side of the seatback 4.

The tensile cloth 2a has two joint sections 23a and 24a, and the joint section 23a is positioned below the joint section 24a. In addition, the tensile cloth 2c has two joint sections 23c and 24c, and the joint section 23c is located below the joint section 24c.

Additionally, in the occupant restraining device 100 according to Embodiment 5, the retaining parts 90a and 90b that retain the tensile cloths 2a and 2c are provided on the lower part of the airbag 3.
The retaining part 90a retaining the tensile cloth 2a is provided in the non-expanding section 31 below the joint section 23a of the tensile cloth 2a, and the retaining part 90b that retains the tensile cloth 2c is provided in the non-expanding section 31 below the joint section 23c of the tensile cloth 2c. When the airbag 3 expands and deploys, the retaining parts 90a and 90b restrain the airbag 3 to the tensile cloths 2a and 2c so that the airbag 3 does not separate from the normal position.

The retaining part 90a has a through hole 94a formed in the non-expanding section 31 through which the tensile cloth 2a passes. The through hole 94a has an elongated hole shape and extends along the seam of the first panel 3a and the second panel 3b. The length of the through hole 94a is greater than the width of the tensile cloth 2a.
The retaining part 90b has a through hole 94b formed in the non-expanding section 31 that the tensile cloth 2c passes through. The through hole 94b has an elongated hole shape and extends along the seam of the first panel 3a and the second panel 3b. The length of the through hole 94b is greater than the width of the tensile cloth 2c.

The tensile cloth 2a is arranged on the inner side of the side part of the seatback 4 while passing through the through hole 94a of the retaining part 90a, and the tensile cloth 2c is arranged on the inner side of the side part of the seatback 4 while passing through the through hole 94b of the retaining part 90b.

The length of the through hole 94a of the retaining part 90a is greater than the width of the tensile cloth 2a, the tensile cloth 2a passes through the through hole 94a enabling the tensile cloth 2a to slide freely, and the airbag 3 is retained in the tensile cloth 2a when expanded and deployed.
Additionally, since the length of the through hole 94b of the retaining part 90b is greater than the width of the tensile cloth 2c, the tensile cloth 2c passes through the through hole 94b enabling the tensile cloth 2c to slide freely, and upon expansion and deployment, the airbag 3 is retained by the tensile cloth 2c.

Thus, the separating of the airbag 3 from the tensile cloths 2a, 2c and separating from the normal position can be suppressed, and the tensile cloths 2a and 2c can reliably bias arrangement of the airbag 3 to the side of the occupant. Additionally, the lengths of the through hole 94a of the retaining part 90a and the through hole 94b of the retaining part 90b are greater than the width of the tensile cloths 2a and 2c, and thus the expansion and deployment of the airbag 3 and the expansion of the tensile cloths 2a and 2c are not hindered.

Additionally, with the occupant restraining device 100 according to Embodiment 5, since the retaining parts 90a and 90b are provided in the non-expanding section 31 of the airbag 3, it is possible to prevent gas from leaking from the seams of the retaining parts 90a and 90b that would reduce the gas pressure in the airbag 3.
Furthermore, the retaining parts 90a and 90b can be simply provided by drilling the prescribed positions of the non-expanding section 31 of the airbag 3.

Sections similar to Embodiment 1 are given the same code and detailed description thereof is omitted.

### Embodiment 6

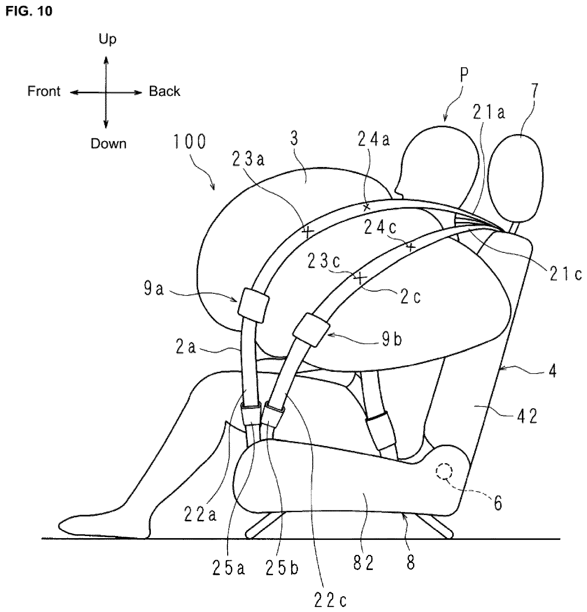

FIG. 10 is a schematic diagram illustrating a state in which an airbag 3 of the occupant restraining device 100 according to Embodiment 6 is expanded and deployed. For convenience, FIG. 10 illustrates expansion and deployment of only the airbag 3 on the left side of the occupant P. In actuality, the airbag 3 expands and deploys on both the left and right sides of the occupant P in the same manner. Therefore, in the following, FIG. 10 will be used to describe expansion and deployment of only the airbag 3 to the left of the occupant P as an example.

With the occupant restraining device 100 according to Embodiment 6, the tensile cloth 2a and the tensile cloth 2c are provided for one airbag 3 on the left side. The upper end part 21a of the tensile cloth 2a and the upper end part 21c of the tensile cloth 2c are secured to the upper part of the seatback 4.

On the other hand, the lower end part 22a of the tensile cloth 2a and the lower end part 22c of the tensile cloth 2c are retained in the lower securing part 81 (see FIG. 1) of the seat cushion 8 via the pretensioner mechanisms 25a and 25b (tension applying mechanism). The pretensioner mechanisms 25a and 25b apply tension to the tensile cloths 2a and 2c.

The pretensioner mechanism 25a is provided between the lower end part 22a of the tensile cloth 2a and the lower securing part 81 of the seat cushion 8, and the pretensioner mechanism 25b is provided between the lower end part 22c of the tensile cloth 2c and the lower securing part 81 of the seat cushion 8.

The pretensioner mechanisms 25a and 25b have a configuration similar to that of a pretensioner used for pulling in a vehicle seat belt in response to an impact. The pretensioner mechanisms 25a and 25b impart tension during expansion and deployment of the airbag 3 by pulling the tensile cloths 2a and 2c toward the lower securing part 81.

Similar to Embodiment 2, with the occupant restraining device 100 according to Embodiment 6, the tensile cloth 2a has two joint sections 23a and 24a, and the tensile cloth 2c has two joint sections 23c and 24c.

Additionally, similar to Embodiment 2, in the occupant restraining device 100 according to Embodiment 6, the retaining parts 9a and 9b that retain the tensile cloths 2a and 2c are provided on the lower part of the airbag 3. A retaining part 9a that retains the tensile cloth 2a is provided below the joint section 23a of the tensile cloth 2a, and a retaining part 9b that retains the tensile cloth 2c is provided below the joint section 23c of the tensile cloth 2c.

With the configuration described above, in the occupant restraining device 100 according to Embodiment 6, the airbag 3 can be suppressed from separating from the tensile cloths 2a and 2c and detaching from the normal position, and the tensile cloths 2a and 2c can reliably bias arrangement of the airbag 3 to the side of the occupant P.

In addition, in the occupant restraining device 100 according to Embodiment 6, the pretensioner mechanisms 25a and 25b pull the tensile cloths 2a and 2c toward the lower securing part 81 side during expansion and deployment of the airbag 3 enabling increasing the force with which the tensile cloths 2a and 2c bias the airbag 3 toward the side of the occupant P. Thus, the airbag 3 can be arranged more quickly and reliably on the side of the occupant P, and the occupant P can be protected.

Sections similar to Embodiment 1 are given the same code and detailed description thereof is omitted.

### Embodiment 7

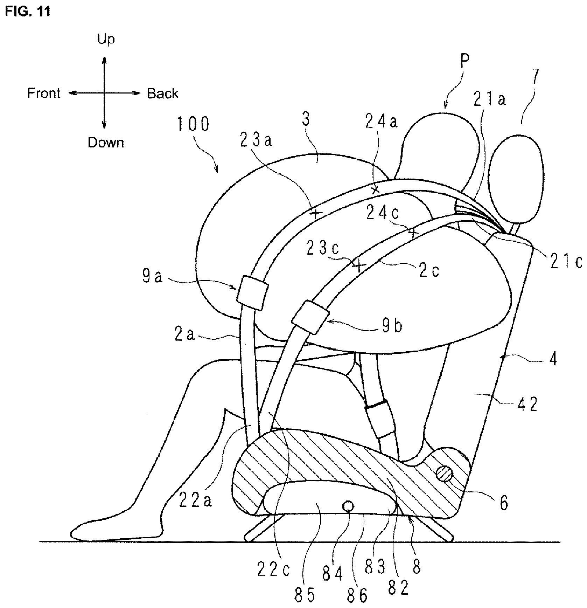

FIG. 11 is a schematic diagram illustrating a state in which an airbag 3 of the occupant restraining device 100 according to Embodiment 7 is expanded and deployed. For convenience, FIG. 11 illustrates expansion and deployment of only the airbag 3 on the left side of the occupant P. In actuality, the airbag 3 expands and deploys on both the left and right sides of the occupant P in the same manner. Therefore, in the following, FIG. 11 will be used to describe expansion and deployment of only the airbag 3 to the left of the occupant P as an example.
Note that in FIG. 11, for convenience, only the seat cushion 8 is illustrated in a cross-sectional view.

With the occupant restraining device 100 according to Embodiment 7, the tensile cloth 2a and the tensile cloth 2c are provided for one airbag 3 on the left side. The upper end part 21a of the tensile cloth 2a and the upper end part 21c of the tensile cloth 2c are secured to the upper part of the seatback 4. In addition, the lower end part 22a of the tensile cloth 2a and the lower end part 22c of the tensile cloth 2c are retained by the lower securing part 81 of the seat cushion 8 (see FIG. 1).

With the occupant restraining device 100 according to Embodiment 7, the tensile cloth 2a has two joint sections 23a and 24a, and the tensile cloth 2c has two joint sections 23c and 24c similar to Embodiment 2.
Additionally, similar to Embodiment 2, in the occupant restraining device 100 according to Embodiment 7, the retaining parts 9a and 9b that retain the tensile cloths 2a and 2c are provided on the lower part of the airbag 3. A retaining part 9a is provided below the joint section 23a of the tensile cloth 2a, and a retaining part 9b is provided below the joint section 23c of the tensile cloth 2c.

On the other hand, the seat cushion 8 includes a cushion pad 82 and a panel member 86 arranged on the lower side of the cushion pad 82 and supporting the cushion pad 82. The cushion pad 82 includes a shock absorbing material that absorbs impact, and the panel member 86 constitutes the bottom section of the seat cushion 8.

The seat cushion 8 includes an airbag device 83 (tension applying mechanism) therein. The airbag device 83 is interposed between the cushion pad 82 and panel member 86. Additionally, the airbag device 83 includes an airbag 85, which is, for example, a bag body formed by sewing the peripheral edge of two panels, and an inflator 84 that emits gas into the airbag 85.

Prior to expansion and deployment, the airbag 85 is laid flat from the thigh of the occupant P to over the tail bone thereof. When a vehicle collision is detected, and the inflator 84 operates to supply gas, the airbag 85 expands and deploys along the inner surface of the panel member 86.

With the configuration described above, in the occupant restraining device 100 according to Embodiment 7, the airbag 3 can be prevented from separating from the tensile cloths 2a and 2c and detaching from the normal position, and the tensile cloths 2a and 2c can reliably bias arrangement of the airbag 3 to the side of the occupant P.

Additionally, in the occupant restraining device 100 according to Embodiment 7, the airbag device 83 is provided inside the seat cushion 8, and when a vehicle collision occurs, the airbag 85 expands and deploys along the inner surface of the panel member 86. At this time, the airbag 85 pushes up from the thigh of the occupant P to the upper side via the cushion pad 82.

This effectively suppresses the so-called seatbelt submarining phenomenon, in which the occupant P slips out of the seat belt and slides down from the seat 5 and into the foot space. Accordingly, even more reliably, the airbag 3 can be arranged on the side of the occupant P to receive and protect the occupant P.

Sections similar to Embodiment 1 are given the same code and detailed description thereof is omitted.

### Embodiment 8

In Embodiment 1, a case where the upper part of the airbag 3 is sewn and secured to the tensile cloths 2a and 2b was described as an example but is not limited to this.

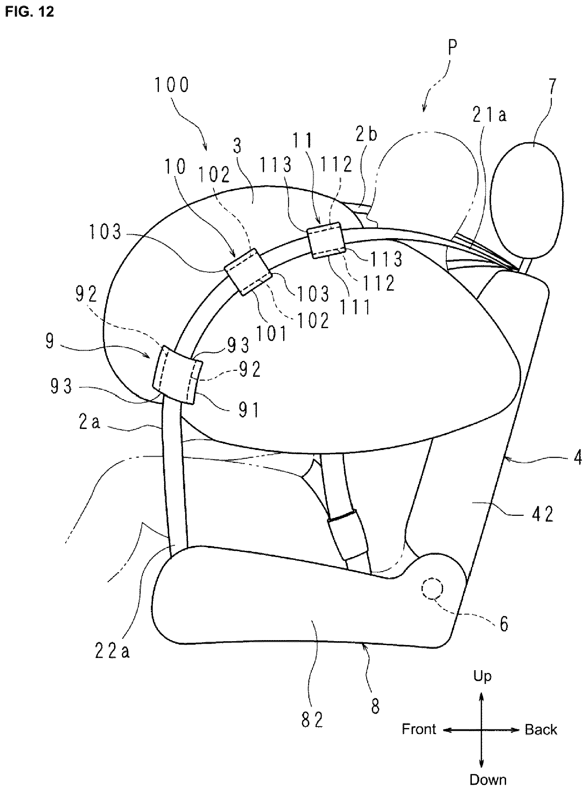

FIG. 12 is a schematic diagram illustrating a state in which an airbag 3 of the occupant restraining device 100 according to Embodiment 8 is expanded and deployed. In FIG. 12, for convenience, the occupant P is indicated by a two-dot chain line, and only a state of expansion and deployment of the airbag 3 on the left side of the occupant P is illustrated, but the other airbag 3 is expanded and deployed similarly on the right side of the occupant P.

In the occupant restraining device 100 according to Embodiment 8, position adjustment is performed by the tensile cloth 2a on the left side airbag 3, and position adjustment is performed by the tensile cloth 2b on the right side airbag 3.
In the following, an example of expansion and deployment of only the airbag 3 on the left side of the occupant P will be described with reference to FIG 12.

The upper end part 21a of the tensile cloth 2a is secured to the upper part of the seatback 4. In addition, a lower end part 22a of the tensile cloth 2a is retained by the lower securing part 81 at the front center section of the seat cushion 8 (see FIG. 1). The tensile cloth 2a is arranged in the left side of the seat 5.

In the occupant restraining device 100 of Embodiment 8, three retaining parts 9, 10, and 11 that retain the tensile cloth 2a are provided over the upper part to the lower part of the airbag 3. Of the retaining parts 9, 10, and 11, the retaining part 9 is positioned below the retaining part 10, and the retaining part 11 is positioned above the retaining part 10. The retaining parts 9, 10, and 11 are provided with prescribed intervals from each other.
The retaining parts 9, 10, and 11 retain the tensile cloth 2a so that the airbag 3 does not detach from the normal position when the airbag 3 expands and deploys.

The retaining part 9 includes a rectangular retaining piece 91, and the retaining piece 91 is sewn to the lower part of the airbag 3. The retaining piece 91 is sewn to the airbag 3 using sewn parts 92 at both end parts on the left and right sides. The sewn parts 92 are separated by prescribed intervals in the left-right direction, and the spacing is wider than the width of the tensile cloth 2a. Thus, the retaining part 9 forms a passage having an opening 93 at both ends in the vertical direction.

The retaining part 10 includes a rectangular retaining piece 101. In the retaining piece 101, the sewn parts 102 at both end parts on the left and right side are sewn to the airbag 3 at substantially the center section of the airbag 3. The sewn parts 102 are spaced at a prescribed distance that is more than the width of the tensile cloth 2a in the left-right direction, and thus, the retaining part 10 forms a passage having an opening 103 at both ends in the vertical direction.

The retaining part 11 includes rectangular retaining piece 111. Sewn parts 112 of the retaining piece 111 are sewn to the airbag 3 at both end parts on the left and right at the upper part of the airbag 3. The sewn parts 112 are spaced a prescribed distance that is more than the width of the tensile cloth 2a in the left-right direction, and thus, the retaining part 11 forms a passage having an opening 113 at both ends in the vertical direction.

With the tensile cloth 2a passing through all the passageways of the retaining parts 9, 10, and 11, the airbag 3 is arranged inside the side of the seat 5.

As described above, both end parts of the retaining parts 9, 10, and 11 (retaining pieces 91, 101, and 111) are sewn to the airbag 3, and a passage is formed between the retaining pieces 91, 101, and 111 and the airbag 3, and the tensile cloth 2a can slide freely on the airbag 3 because the tensile cloth 2a passes through each passage of the retaining parts 9, 10, and 11. Thus, although the airbag 3 is restrained by the retaining parts 9, 10, and 11, the expansion and deployment of the airbag 3 is not obstructed.

Therefore, during inflation and deployment, the airbag 3 can be more effectively restrained from moving away from the tensile cloth 2a and from a normal position without interfering with the expansion and deployment, and the tension fabric 2a can reliably bias and position the airbag 3 toward the side of the occupant P side.

Additionally, as described above, the tensile cloth 2a is not secured to the retaining parts 9, 10, and 11, and can freely slide, and the retaining parts 9, 10, and 11 are open in the vertical direction. Thus, when the airbag 3 expands and deploys, the retaining parts 9, 10, and 11 can guide the sliding direction of the tensile cloth 2a in the vertical direction. Thus, flexibility can be provided in the selection of folding methods for stowage.

As described above, relative to one tensile cloth 2a, the three retaining parts 9, 10, and 11 are arranged in parallel at prescribed intervals from the upper part to the lower part of the airbag 3, and thus the position adjustment of the airbag 3 that expands and deploys can be adjusted more stably as described above.

In the above, the case where the airbag 3 on the left side of seat 5 is retained by the tensile cloth 2a via retaining parts 9, 10, and 11 is described, which is the same for the airbag 3 on the right side of the seat 5. That is, three retaining parts are provided relative to the tensile cloth 2b, and the airbag 3 on the right side of the seat 5 is retained by the tensile cloth 2b via the three retaining parts. Expansion and deployment of the airbag 3 on the right side is the same as the airbag 3 on the left side, and the detailed description thereof is omitted.

In addition, in what has been described above, the case where one tensile cloth 2a is provided for one airbag 3 has been described as an example but is not limited thereto, and there may be two or more tensile cloths for one airbag 3.

In addition, as described above, the case has been described in which three retaining parts 9, 10, and 11 are provided with respect to one tensile cloth 2a, but is not limited thereto, and there may be two or 4 or more retaining parts.

Sections similar to Embodiment 1 are given the same code and detailed description thereof is omitted.

The technical features (configuration elements) disclosed in the respective Embodiments 1 to 8 can be mutually combined, and by combining the Embodiments thereof, new technical features can be formed.
Note that the scope of the claims is denoted by reference numerals to aide in understanding. The scope of the present invention is not limited to the description of the specification identified by such reference numerals, and includes all changes within the scope and range that are indicated by the claims and equivalent to the claims.

### EXPLANATION OF CODES

1a, 1b. Airbag module
2a, 2b, 2c, 2d. Tensile cloth
2e. Integrated part
3. Airbag
3a. First panel
3b. Second panel
4. Seatback
5. Seat
6. Shaft
7. Headrest part
8. Seat cushion
9a, 9b, 10, 11. Retaining part
23a, 24a, 23c, 24c. Joint part
25a, 25b. Pre-tensioner mechanism
31. Non-expanding section
41. Upper surface
42, 43. Side surface
83. Airbag device
90a, 90b. Retaining part
91a, 91b. Retaining piece
94a, 94b. Through-hole
100. Occupant restraining device
F1, F2. Securing position
P. Occupant

## Claims

1. An occupant restraining device (100), comprising:
tensile cloths (2a, 2b, 2c, and 2d) having both ends secured to the upper and lower parts of a vehicle seat (5) that bias an airbag (3) expanding and deploying to the side of an occupant (P) seated in the seat (5), towards the occupant (P), wherein
at least one retaining part (9a, 9b, 90a, 90b, 10, and 11) is provided for slidably retaining the tensile cloths (2a, 2b, 2c, and 2d) on the surface of the airbag (3).

2. The occupant restraining device (100) according to claim 1, wherein the tensile cloths (2a, 2b, 2c, and 2d) are jointed at least at one joint section (23a, 24a, 23c, and 24c) on the surface of the airbag (3).

3. The occupant restraining device (100) according to claim 1 or 2, wherein the retaining parts (9a, 9b, 90a, and 90b) are arranged on the lower part of the airbag (3).

4. The occupant restraining device (100) according to any one of claims 1 to 3, wherein the retaining parts (9a and 9b) include retaining pieces (91a and 91b) sewn to the airbag (3) and the retaining pieces (91a and 91b) are open in the sliding direction of the tensile cloths (2a and 2c).

5. The occupant restraining device (100) according to any one of claims 1 to 4, wherein the airbag (3) is formed by sewing together a plurality of panels (3a and 3b), and the retaining parts (9a and 9b) are provided on a non-expanding section (31) to the outside of the seam.

6. The occupant restraining device (100) according to any one of claims 1 to 3, wherein the airbag (3) is formed by sewing together a plurality of panels (3a and 3b), and the retaining parts (90a and 90b) include through holes (94a and 94b) formed on a non-expanding section (31) to the outside of the seam.

7. The occupant restraining device (100) according to any one of claims 1 to 6, further comprising: a tensioning mechanism (25a, 25b, and 83) provided in a seat cushion (8) of the seat (5) that imparts tension on the tensile cloths (2a, 2b, 2c, and 2d).

8. The occupant restraining device (100) according to claim 1, wherein there are a plurality of retaining parts (9, 10, and 11) which are arranged at prescribed intervals from the upper part to the lower part of the airbag (3).
